# EUROPEAN PATENT SPECIFICATION

(11) **EP 4 330 181 B1**
(45) Date of publication and mention of the grant of the patent: **19.11.2025**
(21) Application number: 22741292.1
(22) Date of filing: 11.07.2022
(51) Int. Cl.: B66C 23/20, E04H 9/02, E04H 12/34, F03D 7/02, F03D 13/00, F03D 13/10, F03D 13/20

(54) **CLIMBING CRANE FOR ERECTING A WIND TURBINE AND METHOD FOR ERECTING A WIND TURBINE WITH A CLIMBING CRANE**
KLETTERKRAN ZUM AUFRICHTEN EINER WINDTURBINE UND VERFAHREN ZUM AUFRICHTEN EINER WINDTURBINE MIT EINEM KLETTERKRAN
GRUE HISSANTE POUR L'ÉRECTION D'UNE ÉOLIENNE ET PROCÉDÉ D'ÉRECTION D'UNE ÉOLIENNE À L'AIDE D'UNE GRUE HISSANTE

(30) Priority: 30.08.2021 EP 21382788
(43) Date of publication of application: 06.03.2024
(73) Proprietor: Siemens Gamesa Renewable Energy Innovation & Technology S.L., 31621 Sarriguren (Navarra) (ES)
(72) Inventor: ERRO MARTINEZ, Carlos, 31015 PAMPLONA (ES); OSORIO MARTINEZ, Juan Manuel, 31600 Burlada (NAVARRA) (ES)
(74) Representative: SGRE-Association
(86) International application number: PCT/EP2022/069289
(87) International publication number: WO 2023/030731

(56) References cited:
- EP-A1- 3 048 299
- WO-A1-2013/171359
- WO-A1-2020/001719
- WO-A1-2020/001720
- DE-A1- 19 647 515
- JP-A- H1 182 285
- JP-B2- 4 598 547
- US-A1- 2016 010 621

## Description

### FIELD OF THE INVENTION

The present invention relates to a climbing crane for the assembly of the wind turbine. Furthermore, the invention relates to a method of assembling a wind turbine. In particular it relates to a method of assembling a wind turbine with a climbing crane.

### BACKGROUND OF THE INVENTION

According to the state of the art, wind turbines comprise a tower fixed to a foundation, a nacelle placed on the top of the tower, a rotor coupled to the nacelle and a plurality of blades coupled to the rotor. Large wind towers often comprise a plurality of tower sections which are stacked forming the tower.

Every wind turbine reacts to external excitation caused mainly by the wind at a certain frequency with its own oscillation, said frequency being denominated the natural frequency. During the assembly of the wind turbine. In particular, during the erection of the tower of the wind turbine when the rotor-nacelle assembly is not yet mounted on the tower, there is a high risk of tower oscillation due to vortex induced vibrations. Although this is the most likely time at which dangerous oscillations occur, it is not the only one, oscillation could also happen when the nacelle has been assembled without the drive train or also when the nacelle has been assembled without blades. This vortex induced vibrations generate alternating pressure differences over the tower cross section perpendicular to the wind direction which could cause damage to the tower or reduce its fatigue life.

To avoid this problem the most commonly used technical solutions are based on the use of helical strakes along the outer tower section structure and/or on the use of mass damper devices. Both the strakes and the mass damper devices are usually temporary equipment to be mounted and dismounted on each tower as once the wind energy installation is fully assembled, the mass of the nacelle, rotor and/or blades is enough to avoid or minimize the vortex induced vibrations.

EP2851490A1 discloses a method for reducing vortex induced vibrations during transport of a wind turbine tower whilst maintaining the power output of such turbine in an operational state. The tower is equipped with a strake set comprising a number of detachable strakes positioned to lead from a top of the tower in the upright position down towards a bottom of the tower. The strake comprises a rope covered at a least along a substantial part of its longitudinal extension with a covering structure realized to substantially increase the wind resistance of the strake.

A disadvantage of the use of helical strakes is that a space to uncoil the helical strakes is needed and this is not always possible. Furthermore, as the helical strakes must be assembled and disassembled the time and cost for erecting a wind installation is increased.

EP3048295A1 discloses a vibration damping system comprising a vibration mass damper and at least a temporary platform to which the vibration damping system can be fixed within a final tower section of the turbine tower. The natural frequency of the vibration damper can be adapted either to a first frequency of the tower without nacelle or to a first frequency of the wind energy installation with the nacelle by increasing or reducing the pendulum length of the mass damper.

A disadvantage of this solution is that as the vibration damper must be assembled and disassembled on the tower when erecting the wind turbine, the time and cost for erecting a wind installation being increased.

A further example of crane for these applications is disclosed in JP 4 598 547 B2. It is therefore a goal of the present invention to provide a method of erecting a wind turbine and a climbing crane which overcomes the above-mentioned disadvantages.

### SUMMARY OF THE INVENTION

The object of the invention is achieved by the independent claims. The dependent claims describe advantageous developments and modifications of the invention.

In accordance with the invention, a climbing crane for assembling a wind turbine is provided. The climbing crane is configured to elevate and stack a number of tower sections to form the tower by climbing along the already erected tower sections and mounting a further tower section on the last erected tower section, and to elevate and mount the nacelle on the tower. The climbing crane may comprise a plurality of vibration damping devices, each configured to be activated or deactivated to adapt the resultant natural frequency of the plurality of vibration damping devices to at least a first vibration frequency of the erected tower when the climbing crane is coupled to a section the tower.

The first natural frequency is also known as the first natural bending frequency and may depend on the weight and the stiffness of the erected part, and also on the wind loads that are specific to the site where the wind turbine is erected and its meteorological conditions.

An important advantage of the climbing crane according to the present invention is that as the damping device is integrated in the climbing crane which is connected to the tower during the whole installation process, the use of extra devices for damping oscillations which are normally fixed to the tower as for example helical strakes are avoided. This implies that the installation is optimized. There is a time and cost reduction because there is no need to install and dismantle the helical strakes, and a space to uncoil the helical strakes which is especially interesting when the wind turbine is to be erected in a forest of a hill is not needed.

Moreover, any interference of the vibration damping device with the climbing crane is avoided and the complexity and space required to remove for example the helical strakes is eliminated. Furthermore, the damping device may be integrated in all the different climbing crane designs.

This way a modular damping device is obtained which can be easily adapted to the first frequencies of each part of the wind turbine which has been erected.

In an example, the system may comprise locking means which maintain the vibration damping device in an inactive condition. This locking means allows to design a modular vibration damping device which can easily control the condition of each vibration damping device through this locking means.

In an example, the vibration damping device may comprise a tuned mass damper which comprises a mass and at least a spring and/or a dashpot element through which the mass is fixed to a frame of the climbing crane.

In another example, the vibration damping device may comprise a pendulum tuned mass damper comprising a pendulum which end is fixed to a frame of the climbing crane.

In another example, the vibration damping device may comprise a viscous damped pendulum fixed to a frame of the climbing crane.

In another example, the locking means may comprise an electromechanical locking device as it allows a simple and optimized solution.

In an example, the locking means may be remotely operated for activating or deactivating the corresponding vibration damping device. Thus, the resultant natural frequency of the vibrating devices can be adapted at any position of climbing crane, not being necessary to be accessible to the operator.

In an example each vibration damping device may be remotely operated by remotely actuating in the corresponding locking means.

In an example, the corresponding vibration damping device is interchangeable. Thus, it may be easily removed and interchanged by other vibration damping device with another natural frequency allowing to easily adapt to any wind turbine.

In accordance with the invention there is further provided a method of assembling a wind turbine with a climbing crane. The method may comprise the following steps:
- coupling a plurality of vibration damping devices to a climbing crane; and
- coupling the climbing crane to a tower section so that the vibration damping device is displaced along the tower with the climbing crane as the climbing crane climbs, erecting a corresponding tower segment until forming the whole tower; thereby
- activating or deactivating vibration damping devices to adapt the resultant natural frequency of the plurality of vibration damping devices to at least a first vibration frequency of the erected tower.

In an example, each vibration damping device may comprises a mass which is fixed to the climbing crane 20 through a spring, dashpot and/or a rope, so that the mass can oscillate with respect to the tower.

In an example, the method further comprises the steps:
- installing the nacelle without a drive train on the top of the erected tower;
- installing the drive train inside the nacelle;
- the natural resultant frequency of the plurality of vibration damping devices being adjusted respectively to the first vibration frequency of the set formed by the tower and the nacelle and to the first vibration frequency of the set formed by the tower , the nacelle and the drive train, by activating or deactivating the corresponding vibration damping device.

In an example each vibration damping device may be activated or deactivated by actuating locking means which maintain the vibration damping device in an inactive condition avoiding any possibility of free oscillation of said damping device with respect to the erected part of the tower.

In an example the activation and/or deactivation of the corresponding mass damping device is made through a remote control.

Advantages relating to the described climbing crane may as well pertain to the method and vice versa.

Advantageous configurations and embodiments of the climbing crane according to the invention follow from claims dependent on claim 1, as well as the following description. Furthermore, advantageous configurations and embodiments of the method according to the invention follow from claims dependent on claim 10. The advantageous features of the method of assembling the wind turbine, and the climbing crane can generally be combined.

### BRIEF DESCRIPTION OF THE DRAWINGS

Embodiments of the invention are now described, by way of example only, with reference to the accompanying drawings, of which:
Figure 1 shows an example of a wind turbine assembled according to an example of a method according to the invention.
Figures 2 and 3 show different steps of an example of the method of assembling a wind turbine according to the invention;
Figure 4 shows a detail of an example of a climbing crane according to the invention; and
Figure 5 shows a detail of another example of a climbing crane according to the invention.
Figure 6 shows a schematic detail of a vibration damper device comprised in the climbing crane shown in figure 4 or in figure 5.

The illustration in the drawings is in schematic form. It is noted that in different figures, similar or identical elements may be provided with the same reference signs.

### DESCRIPTION OF THE DRAWINGS

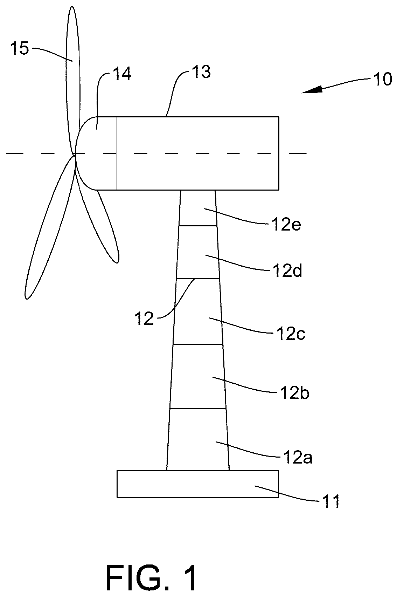

Figure 1 shows an example of a wind turbine 10 which has been assembled according to the method of the invention. The wind turbine 10 may comprise a tower 12 that stands in an upright position, a foundation 11 to which the bottom of the tower 12 is connected, the foundation 11 being fixed to the ground, a nacelle 13 mounted on the top of the tower 12, a drive train inside the nacelle 13 not shown in the figures, a rotor 14 mounted on the front end of the nacelle 13, and a plurality of blades 15 connected to the rotor 14.

The upright position refers to the position of the tower on the assembly site, said position being substantially vertical.

In the example shown in the figure 1, the tower 12 may comprise a plurality of tower sections 12a-12e. The plurality of tower sections 12a-12e are stacked forming the tower 12. The length of each tower sections 12a-12e may be different. Furthermore, each tower section 12a-12e may have a frustoconical shape.

In another example not shown in the figures, the tower 12 may comprise a plurality of tower sections 12a-12e of similar length.

In an aspect of the invention, a climbing crane 20 for assembling the wind turbine 10 is provided. The climbing crane 20 may comprise at least a vibration damping device 31 which is configured for damping at least a first vibration frequency of the erected tower 12 when the climbing crane 20 is coupled to the tower 12 during the erection of the wind turbine 10. The term "erection" may be understood as "assembly", "mounting", "lifting" or similar terms.

The first natural frequency also known as the first natural bending frequency is particularly relevant for wind turbines 10. The first vibration frequency may depend on the weight and the stiffness of the erected part or the wind turbine, and also on the wind loads that are specific to the site where the wind turbine 10 is erected and its meteorological conditions.

The vibration damping device 31 may be attached to the climbing crane 20 once, and then is moved together with the climbing crane 20 until the wind turbine 10 is completely installed and the climbing crane 20 is lowered down to the ground.

The climbing crane 20 may be any climbing crane known in the state of the art. The climbing crane 20 may comprise a frame or body 23, a lifting arm 21 coupled to the frame 23, a lifting cable 22, a hook 25 fixed to the lifting cable 22 and a climbing system 24 through which the climbing crane 20 is fixed to the tower 12 and climbs along it. The climbing crane 20 is fixed to the tower 12 by the climbing system 24 when lifting a part of the wind tower 10, said climbing system 24 being configured for displacing the climbing crane 20 along the tower 12 once the corresponding tower segment has been mounted.

The climbing crane 20 may be configured for elevating and stacking each of the tower sections 12a-12e to form the tower 12, said climbing crane 20 climbing along the tower sections 12a-12e which have already been erected, and mounting once another tower section has been positioned above the last erected tower section. Once the complete tower 12 has been erected, the climbing crane 20 positioned at the end of the erected tower 12 may elevate and mount the nacelle 13 on the top of the tower 12, and after that the rotor 14 and the plurality of blades 15.

As it has been explained before, the first natural frequency of the erected wind turbine 10 changes as more parts of the wind turbine 10are erected or assembled. For example, the first natural frequency of the first erected tower section 12a is smaller than the first natural frequency of the full erected tower 12, and furthermore when the nacelle 13 is mounted the first natural frequency of the whole also changes. In particular, the first natural frequency of the whole also changes if the nacelle 13 is installed without the drive train or if it is installed with the drive train inside.

In an example, the climbing crane 20 may comprise a plurality of vibration damping devices 31, each one being fixed to the frame 23 of the climbing crane 20. Each damping device 31 may be configured for being activated or deactivated for adapting the natural resultant frequency of the plurality of vibration damping devices to the first vibration frequency of the erected tower 12.

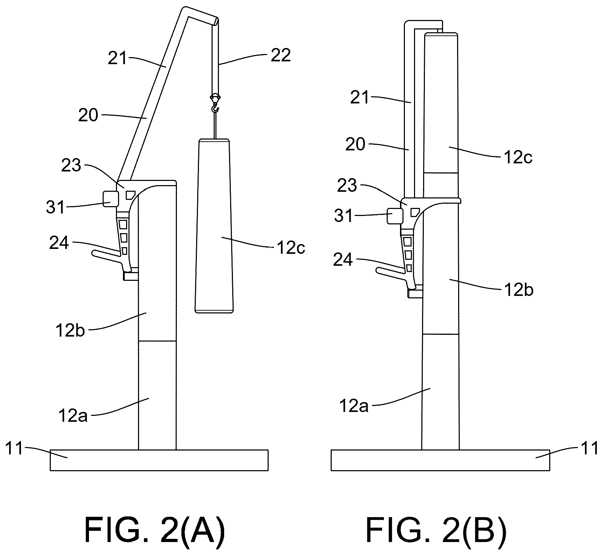

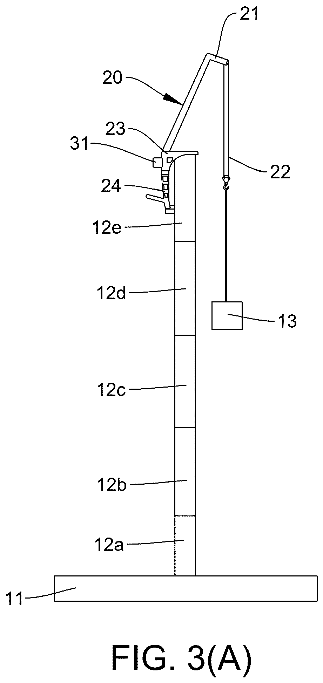

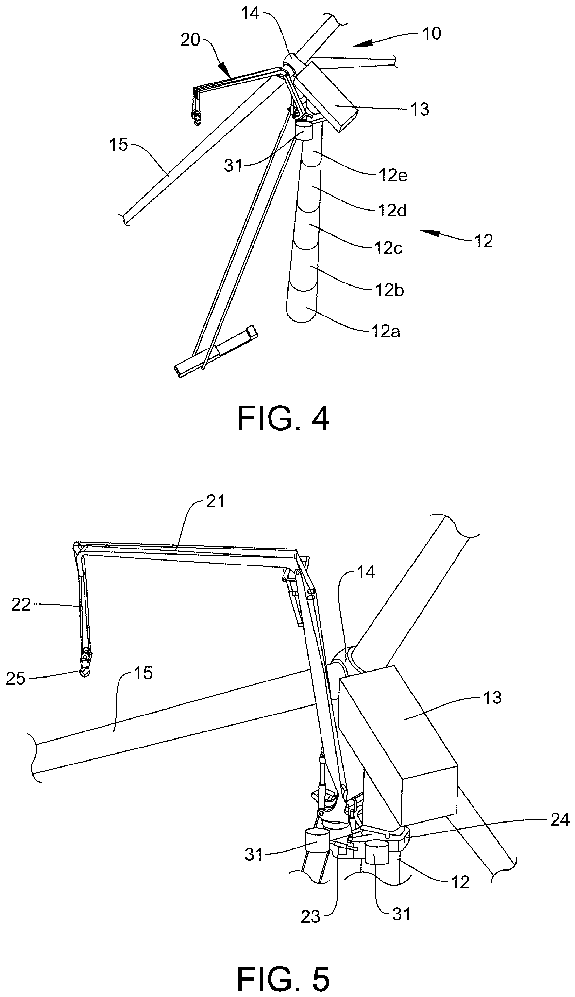

In another example shown in figure 5, the climbing crane 20 may comprise a plurality of vibration damping devices 31, each one being fixed to the frame 23 of the climbing crane 20. Each damping device 31 may be configured for being activated or deactivated for adapting the natural resultant frequency of the plurality of vibration damping devices 31 to the first vibration frequency of part of the wind turbine 10 which has been already erected. That is to say, when the first tower segment 12a is erected and the climbing crane 20 is coupled to the first tower segment 12a, the damping devices 31 are activated or deactivated individually in order to obtain a natural resultant frequency which can damp the first vibration frequency of the first tower segment 12a. Once the second tower segment 12b is erected the damping devices 31 are again individually activated or deactivated for obtaining a natural resultant frequency which can damp the first vibration frequency of the already erected part of the tower 12, that is to say of the first and second tower segments 12a and 12b. After that, the climbing crane 20 climbs until being positioned at the end of the second tower segment 12b, the climbing crane 20 climbs until being positioned at the end of the second tower segment 12b for erecting the third segment 12c. Once the third segment 12c is erected, the damping devices 31 are again individually activated or deactivated and so on until the whole tower 12 is erected as it is shown in figures 2(a) and 2(b). Once the tower 12 has been erected, the climbing crane 20 may be positioned on the top of the tower 12 and erect the nacelle 13 as it is shown in figure 3(a) the plurality of damping devices 31 being adjusted again for adapting to the first vibration frequency of the tower 12 and the nacelle 13, and so on until the whole wind turbine 10 is erected.

The plurality of vibration damping devices 31 may act as a modular vibration damping device. In an example, the plurality of vibration damping device may be coupled to the frame 23 symmetrically distributed with respect the tower 12.

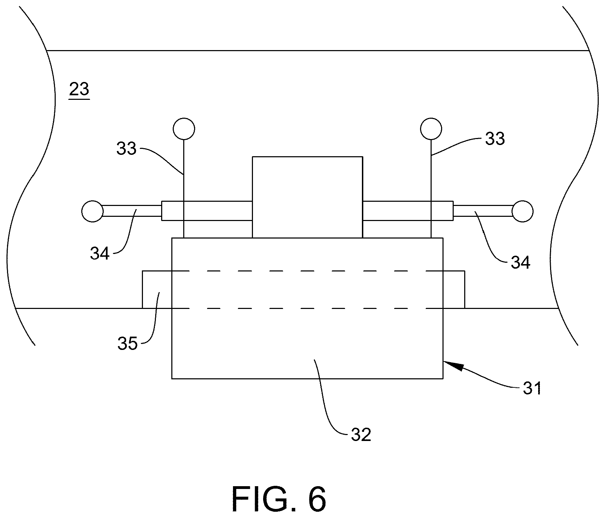

In an example shown in figure 6, each damping device 31 may comprise a tuned mass damper. Said tuned mass damper may comprise a mass 32 and at least one spring 33 and/or one dashpot element 34 through which the mass 32 is fixed to the frame 23 of the climbing crane 20.

In another example, each vibration damping device may comprise a pendulum tuned mass damper. Said pendulum tuned mass damper may comprise a pendulum which end is fixed to a frame of the climbing crane.

In another example, the vibration damping device 31 may comprise a viscous damped pendulum each which end is fixed to a frame 23 of the climbing crane 20.

In another example, the plurality of vibration damping devices 31 may comprise any combination of the damping devices disclosed in the previous examples.

In an example, the climbing crane 20 furthermore may comprise locking means configured for maintaining the corresponding vibration damping device 31 fixed to the frame 23 of the climbing crane 12 in an inactive condition, the locking means 35 being schematically depicted in figure 6. In the inactive condition, the vibration damping device 31 may be maintained fixed to the frame 23 avoiding any possibility of free oscillation of said damping device 31 with respect to said frame 23 and consequently with respect to the erected part of the tower 12, whereas when the vibration damping device 31 is in an active condition, the corresponding damping device 31 may oscillate with a phase shift with respect to the motion of the erected part of the wind turbine 10 and to which the vibration damping device 31 is coupled through the frame 23. In the active condition, the natural frequency of the damping device 31 may be adapted to the first vibration frequency of the erected part of the wind turbine 10 so that a lower vibration amplitude of the erected part is achieved. As the first vibration frequency of the erected part of the wind turbine 1 changes as more parts of the wind turbine 10 are mounted, the plurality of vibration damping devices 31 may adapt the natural resultant frequency to said first vibration frequency during the assembly of the wind turbine 10 activating or deactivating the corresponding vibration damping device 31.

In an example, each locking means may be electromechanical locking means known in the art.

In an example, the locking means may be remotely connected or disconnected, in particular when the climbing crane 20 is in a position which is not accessible for the operators.

The vibration damping device 31 may be fixed to the frame 23 through any known coupling or fixing means in such a way that the vibration damping device 31 does not restrict the operation or climbing of the crane 20.

In an example the corresponding vibration damping device may be interchangeable, that is to say, that it may be coupled to the climbing crane 20 in such a way that it may be easily removed and interchanged by other vibration damping device with another natural frequency.

In further aspect of the invention, the method of assembling a wind turbine 10 with a climbing crane 20 is provided. The method may comprise the following steps:
- Coupling a plurality of vibration damping devices 31 to a climbing crane 20 and
- coupling the climbing crane 20 to a tower section (12a, ..., 12e) so that the vibration damping device (31) is displaced along the tower 12 with the climbing crane 20 as the climbing crane 20 climbs, erecting a corresponding tower segment 12a-12e until forming the whole tower 12; thereby
- activating or deactivating vibration damping devices 31 to adapt the resultant natural frequency of the plurality of vibration damping devices 31 to at least a first vibration frequency of the erected tower 12.

In an example, and as it has been explained before, in an example each vibration damping device 31 may comprises a mass which is fixed to the climbing crane 20 through a spring, dashpot and/or a rope, so that the mass can oscillate with respect to the tower 12. The mass can be also a pendulum fixed by a rope to the climbing crane 20.

In an example, a plurality of vibration damping devices 31 may be coupled to the climbing crane 20. The climbing crane 12 may erect a corresponding tower segment 12a-12e until the whole tower 12 is formed. The climbing crane 20 may climb to the last erected tower section for erecting each time the following tower section. In each moment, i.e. at each assembly stage, in particular when erecting the following tower section, the natural resultant frequency of the plurality of vibration damping devices 31 may be adjusted to the first vibration frequency of each erected part of the tower 12 by activating or deactivating the corresponding vibration damping device 31.

In an example each vibration damping device 31 may be activated or deactivated by acting on the locking means which maintain the vibration damping device 31 in an inactive condition avoiding any possibility of free oscillation of said damping device 31 with respect to the erected part of the tower 12. Once the locking means are deactivated, the corresponding vibration damping device 31 and in particular, the mass of the corresponding vibration damping device 31 is free to oscillate with respect to the tower 12. When the locking means are activated, they may keep the mass fixed to the climbing crane 20 and consequently to the tower 12.

In an example the activation and/or deactivation of the corresponding mass damping device is made through a remote control.

Once the whole tower 12 is erected, the nacelle 13 may be installed on the top of the tower 12 without the drive train, the natural resultant frequency of the plurality of vibration damping devices 31 may be adjusted to the first vibration frequency of the set formed by the tower 12 and the nacelle 13. Once the nacelle 13 is installed, the drive train may be installed and housed inside the nacelle 13, the natural resultant frequency of the plurality of vibration damping devices 31 may be adjusted to the first vibration frequency of the set formed by the tower 12, the nacelle 13, and the drive train.

Once the nacelle 13 and the drive train are mounted onto the top of the tower 12, the climbing crane 20 may elevate the rotor 14 and the blades 15. In this case, the natural resultant frequency of the plurality of vibration damping devices 31 may be adapted to the assembled parts. Once the wind turbine 10 is installed, the climbing crane 20 may be lowered to the ground.

In an example, the activation and/or deactivation of the corresponding mass damping device 31 is made through a remote control.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

Advantages and features relating to the described climbing crane may as well pertain to the method of assembling the wind turbine and vice versa.

## Claims

1. Climbing crane (20) for assembling a wind turbine (10), the wind turbine (10) comprising a tower (12), a foundation (11) to which the tower (12) is fixed, and a nacelle (13) arranged at the top of the tower (12), which climbing crane (20) is configured to elevate and stack a number of tower sections (12a, ..., 12e) to form the tower (12) by climbing along the already erected tower sections (12a, ..., 12d) and mounting a further tower section (12b, ..., 12e) on the last erected tower section (12a, ..., 12d), and to elevate and mount the nacelle (13) on the tower (12);
**characterized in that**
the climbing crane (20) comprises a plurality of vibration damping devices (31), each configured to be activated or deactivated to adapt the resultant natural frequency of the plurality of vibration damping devices (31) to at least a first vibration frequency of the erected tower (12) when the climbing crane (20) is coupled to a section (12a, ..., 12e) of the tower (12).

2. Climbing crane according to the previous claim, wherein the vibration damping device (31) comprises a tuned mass damper, the tuned mass damper comprising a mass (32) and at least a spring (33) and/or a dashpot element (34) through which the mass is fixed to a frame (23) of the climbing crane (20).

3. Climbing crane according to claim 1, wherein the vibration damping device (31) comprises a pendulum tuned mass damper comprising a pendulum which end is fixed to a frame (23) of the climbing crane (20).

4. Climbing crane according to claim 1, wherein the vibration damping device (31) comprises a viscous damped pendulum which end is fixed to a frame (23) of the climbing crane (20).

5. Climbing crane according to any of the previous claims, which comprises locking means (35) configured for maintaining the corresponding vibration damping device (31) fixed to the frame (23) in an inactive condition.

6. Climbing crane according to the preceding claim, wherein the locking means are remotely operated locking means.

7. Climbing crane according to any of claims 1 to 6, wherein the corresponding vibration damping device (31) is interchangeable.

8. Method of assembling a wind turbine (10) with a climbing crane (20) according to any of claims 1 to 7, the method comprising the steps of:
- coupling a plurality of vibration damping devices (31) to a climbing crane (20); and
- coupling the climbing crane (20) to a tower section (12a, ..., 12e) so that the vibration damping device (31) is displaced along the tower (12) with the climbing crane (20) as the climbing crane (20) climbs, erecting a corresponding tower segment (12a-12e) until forming the whole tower (12); thereby
- activating or deactivating vibration damping devices (31) to adapt the resultant natural frequency of the plurality of vibration damping devices (31) to at least a first vibration frequency of the erected tower (12) .

9. Method according to the previous claim, wherein each vibration damping device (31) comprises a mass which is fixed to the climbing crane through a spring, dashpot and/or a rope, so that the mass can oscillate with respect to the tower (12).

10. Method according to the claim 8 or claim 9, further comprising the steps of
- installing the nacelle (13) without a drive train on the top of the erected tower (12);
- installing the drive train inside the nacelle (13);
the natural resultant frequency of the plurality of vibration damping devices (31) being adjusted respectively to the first vibration frequency of the set formed by the tower (12) and the nacelle (13) and to the first vibration frequency of the set formed by the tower (12), the nacelle (13) and the drive train, by activating or deactivating the corresponding vibration damping device (31).

11. Method according to any of claims 8 to 10, wherein each vibration damping device (31) is activated or deactivated by actuating locking means which maintain the vibration damping device (31) in an inactive condition avoiding any possibility of free oscillation of said damping device (31) with respect to the erected part of the tower (12).

12. Method according to any of claims 8 to 11, wherein the activation and/or deactivation of the corresponding mass damping device (31) is made through a remote control.

## Patentansprüche

1. Kletterkran (20) für die Montage einer Windkraftanlage (10), wobei die Windkraftanlage (10) einen Mast (12), ein Fundament (11), an dem der Mast (12) befestigt ist, und eine Maschinengondel (13), die an der Spitze des Masts (12) angeordnet ist, umfasst, wobei der Kletterkran (20) konfiguriert ist, eine Anzahl von Mastabschnitten (12a, ..., 12e) anzuheben und zu stapeln, um den Mast (12) zu bilden, indem er entlang der bereits errichteten Mastabschnitte (12a, ..., 12d) klettert und einen weiteren Mastabschnitt (12b, ..., 12e) auf den zuletzt errichteten Mastabschnitt (12a, ..., 12d) montiert, und die Maschinengondel (13) auf den Mast (12) zu heben und zu montieren;
**dadurch gekennzeichnet, dass**
der Kletterkran (20) mehrere Schwingungsdämpfungsvorrichtungen (31) umfasst, die jeweils konfiguriert sind, aktiviert oder deaktiviert zu werden, um die resultierende Eigenfrequenz der mehreren Schwingungsdämpfungsvorrichtungen (31) zumindest an eine erste Schwingungsfrequenz des errichteten Masts (12) anzupassen, wenn der Kletterkran (20) an einen Abschnitt (12a, ..., 12e) des Mastes (12) gekoppelt ist.

2. Kletterkran nach dem vorhergehenden Anspruch, wobei die Schwingungsdämpfungsvorrichtung (31) einen abgestimmten Schwingungsdämpfer umfasst, wobei der abgestimmte Schwingungsdämpfer eine Masse (32) und zumindest eine Feder (33) und/oder ein Stoßdämpferelement (34) umfasst, durch das die Masse an einem Rahmen (23) des Kletterkrans (20) befestigt ist.

3. Kletterkran nach Anspruch 1, wobei die Schwingungsdämpfungsvorrichtung (31) einen pendelabgestimmten Schwingungsdämpfer umfasst, der ein Pendel umfasst, dessen Ende an einem Rahmen (23) des Kletterkrans (20) befestigt ist.

4. Kletterkran nach Anspruch 1, wobei die Schwingungsdämpfungsvorrichtung (31) ein viskos gedämpftes Pendel umfasst, dessen Ende an einem Rahmen (23) des Kletterkrans (20) befestigt ist.

5. Kletterkran nach einem der vorhergehenden Ansprüche, der Verriegelungsmittel (35) umfasst, die konfiguriert sind, die entsprechende Schwingungsdämpfungsvorrichtung (31), die an dem Rahmen (23) befestigt ist, in einem inaktiven Zustand zu halten.

6. Kletterkran nach dem der vorhergehenden Anspruch, wobei die Verriegelungsmittel fernbediente Verriegelungsmittel sind.

7. Kletterkran nach einem der Ansprüche 1 bis 6, wobei die entsprechende Schwingungsdämpfungsvorrichtung (31) austauschbar ist.

8. Verfahren zum Montieren einer Windkraftanlage (10) mit einem Kletterkran (20) nach einem der Ansprüche 1 bis 7, wobei das Verfahren die folgenden Schritte umfasst:
- Koppeln mehrerer Schwingungsdämpfungsvorrichtungen (31) an einen Kletterkran (20); und
- Koppeln des Kletterkrans (20) an einen Mastabschnitt (12a, ..., 12e), sodass die Schwingungsdämpfungsvorrichtung (31) mit dem Kletterkran (20) entlang des Masts (12) versetzt wird, wenn der Kletterkran (20) klettert, Errichten eines entsprechenden Mastsegments (12a-12e) bis der gesamte Mast (12) gebildet ist; dabei
- Aktivieren oder Deaktivieren von Schwingungsdämpfungsvorrichtungen (31), um die resultierende Eigenfrequenz der mehreren Schwingungsdämpfungsvorrichtungen (31) zumindest an eine erste Schwingungsfrequenz des errichteten Masts (12) anzupassen.

9. Verfahren nach dem vorhergehenden Anspruch, wobei jede Schwingungsdämpfungsvorrichtung (31) eine Masse umfasst, die durch eine Feder, einen Stoßdämpfer und/oder ein Seil an dem Kletterkran befestigt ist, sodass die Masse bezüglich des Masts (12) schwingen kann.

10. Verfahren nach dem Anspruch 8 oder Anspruch 9, das ferner die folgenden Schritte umfasst:
- Installieren der Maschinengondel (13) ohne Antriebsstrang an der Spitze des errichteten Masts (12);
- Installieren des Antriebsstrangs in der Maschinengondel (13);
wobei die resultierende Eigenfrequenz der mehreren Schwingungsdämpfungsvorrichtungen (31) an die erste Schwingungsfrequenz des Satzes, der durch den Mast (12) und die Maschinengondel (13) gebildet ist, bzw. an die erste Schwingungsfrequenz des Satzes, der durch den Mast (12), die Maschinengondel (13) und den Antriebsstrang gebildet ist, durch Aktivieren oder Deaktivieren der entsprechenden Schwingungsdämpfungsvorrichtung (31) angepasst wird.

11. Verfahren nach einem der Ansprüche 8 bis 10, wobei jede Schwingungsdämpfungsvorrichtung (31) durch Betätigen von Verriegelungsmitteln, die die Schwingungsdämpfungsvorrichtung (31) in einem inaktiven Zustand halten, aktiviert oder deaktiviert wird, wodurch jede Möglichkeit einer freien Schwingung der Dämpfungsvorrichtung (31) bezüglich des errichteten Teils des Masts (12) vermieden wird.

12. Verfahren nach einem der Ansprüche 8 bis 11, wobei die Aktivierung und/oder Deaktivierung der entsprechenden Massendämpfungsvorrichtung (31) durch eine Fernsteuerung durchgeführt wird.

## Revendications

1. Grue hissante (20) pour l'assemblage d'une éolienne (10), l'éolienne (10) comprenant une tour (12), une fondation (11) à laquelle la tour (12) est fixée, et une nacelle (13) agencée au sommet de la tour (12), laquelle grue hissante (20) est configurée pour élever et empiler un certain nombre de sections de tour (12a, ..., 12e) afin de former la tour (12) en grimpant le long des sections de tour déjà érigées (12a, ..., 12d) et en montant une section de tour supplémentaire (12b, ..., 12e) sur la dernière section de tour érigée (12a, ..., 12d), et pour élever et monter la nacelle (13) sur la tour (12) ;
**caractérisée en ce que**
la grue hissante (20) comprend une pluralité de dispositifs d'amortissement de vibrations (31), chacun étant configuré pour être activé ou désactivé de manière à adapter la fréquence propre résultante de la pluralité de dispositifs d'amortissement de vibrations (31) à au moins une première fréquence de vibration de la tour érigée (12) lorsque la grue hissante (20) est couplée à une section (12a, ..., 12e) de la tour (12).

2. Grue hissante selon la revendication précédente, dans laquelle le dispositif d'amortissement de vibrations (31) comprend un amortisseur à masse accordée, l'amortisseur à masse accordée comprenant une masse (32) et au moins un ressort (33) et/ou un élément amortisseur à fluide (34) par l'intermédiaire duquel/desquels la masse est fixée à un châssis (23) de la grue hissante (20).

3. Grue hissante selon la revendication 1, dans laquelle le dispositif d'amortissement de vibrations (31) comprend un amortisseur à masse accordée à pendule comprenant un pendule dont une extrémité est fixée à un châssis (23) de la grue hissante (20).

4. Grue hissante selon la revendication 1, dans laquelle le dispositif d'amortissement de vibrations (31) comprend un pendule à amortissement visqueux dont une extrémité est fixée à un châssis (23) de la grue hissante (20).

5. Grue hissante selon l'une des revendications précédentes, qui comprend des moyens de verrouillage (35) configurés pour maintenir le dispositif d'amortissement de vibrations (31) correspondant fixé au châssis (23) dans un état inactif.

6. Grue hissante selon la revendication précédente, dans laquelle les moyens de verrouillage sont des moyens de verrouillage commandés à distance.

7. Grue hissante selon l'une des revendications 1 à 6, dans laquelle le dispositif d'amortissement de vibrations (31) correspondant est interchangeable.

8. Procédé d'assemblage d'une éolienne (10) avec une grue hissante (20) selon l'une des revendications 1 à 7, le procédé comprenant les étapes de :
- coupler une pluralité de dispositifs d'amortissement de vibrations (31) à une grue hissante (20) ; et
- coupler la grue hissante (20) à une section de tour (12a, ..., 12e) de sorte que le dispositif d'amortissement de vibrations (31) soit déplacé le long de la tour (12) avec la grue hissante (20) au fur et à mesure que la grue hissante (20) grimpe, érigeant une section de tour correspondante (12a-12e) jusqu'à former l'ensemble de la tour (12) ;
- activer ou désactiver ainsi des dispositifs d'amortissement de vibrations (31) pour adapter la fréquence propre résultante de la pluralité de dispositifs d'amortissement de vibrations (31) à au moins une première fréquence de vibration de la tour (12) érigée.

9. Procédé selon la revendication précédente, dans lequel chaque dispositif d'amortissement de vibrations (31) comprend une masse qui est fixée à la grue hissante par l'intermédiaire d'un ressort, d'un amortisseur à fluide et/ou d'une corde, de sorte que la masse puisse osciller par rapport à la tour (12).

10. Procédé selon la revendication 8 ou 9, comprenant en outre les étapes de :
- installer la nacelle (13), sans groupe motopropulseur, au sommet de la tour (12) érigée ;
- installer le groupe motopropulseur à l'intérieur de la nacelle (13) ;
la fréquence propre résultante de la pluralité de dispositifs d'amortissement de vibrations (31) étant ajustée respectivement à la première fréquence de vibration de l'ensemble formé par la tour (12) et la nacelle (13) et à la première fréquence de vibration de l'ensemble formé par la tour (12), la nacelle (13) et le groupe motopropulseur, par activation ou désactivation du dispositif d'amortissement de vibrations (31) correspondant.

11. Procédé selon l'une des revendications 8 à 10, dans lequel chaque dispositif d'amortissement de vibrations (31) est activé ou désactivé par actionnement de moyens de verrouillage qui maintiennent le dispositif d'amortissement de vibrations (31) dans un état inactif empêchant toute possibilité d'oscillation libre dudit dispositif d'amortissement (31) par rapport à la partie érigée de la tour (12).

12. Procédé selon l'une des revendications 8 à 11, dans lequel l'activation et/ou la désactivation du dispositif d'amortissement de masse (31) correspondant est réalisée par commande à distance.
